# EUROPÄISCHE PATENTANMELDUNG

(11) **EP 1 717 971 A1**
(43) Veröffentlichungstag der Anmeldung: **02.11.2006**
(21) Anmeldenummer: 05090096.8
(22) Anmeldetag: 08.04.2005
(51) Int. Cl.: H04B 10/00

(54) **Verfahren zum Betreiben einer optischen Sendevorrichtung, die eine Mehrzahl von unabhängig ansteuerbaren Lasersendern aufweist, sowie optische Sendevorrichtung**

(71) Anmelder: Infineon Technologies Fiber Optics GmbH, 13629 Berlin (DE)
(72) Erfinder: Schrödinger, Karl, Dr., 14089 Berlin (DE)
(74) Vertreter: Müller, Wolfram Hubertus

(57) **Zusammenfassung**

Bezeichnung der Erfindung: Verfahren zum Betreiben einer optischen Sendevorrichtung, die eine Mehrzahl von unabhängig ansteuerbaren Lasersendern aufweist, sowie optische Sendevorrichtung.

Die Erfindung betrifft ein Verfahren zum Betreiben einer optischen Sendevorrichtung, die eine Mehrzahl von unabhängig ansteuerbaren Lasersendern aufweist, von denen mindestens einer zu einem betrachteten Zeitpunkt nicht betrieben wird und als redundanter Ersatz-Lasersender bereitsteht. Es weist die folgenden Schritte auf:
- Prüfen, ob ein Parameterwert eines Parameters eines aktuell für einen Kommunikationsbetrieb eingesetzten Lasersenders (1) ein vorgegebenes Kriterium erfüllt,
- sofern der Parameterwert das vorgegebene Kriterium nicht erfüllt, Ersetzen des aktuell für den Kommunikationsbetrieb verwendeten Lasersenders (1) durch einen Ersatz-Lasersender (2), wobei hierzu
- der bisher verwendete Lasersender (1) in seiner optischen Leistung reduziert und gleichzeitig der Ersatz-Lasersender (2) in seiner optischen Leistung erhöht wird, so dass während einer Übergangszeit (t5-t2) beide Sender (1, 2) Licht emittieren und eine fehlerfreie Übertragung gewährleisten, und
- Verwenden des Ersatz-Lasersenders (2) für den weiteren Kommunikationsbetrieb nach Ablauf der Übergangszeit.

Die Erfindung betrifft des weiteren ein entsprechende optische Sendevorrichtung.

## Beschreibung

Bezeichnung der Erfindung: Verfahren zum Betreiben einer optischen Sendevorrichtung, die eine Mehrzahl von unabhängig ansteuerbaren Lasersendern aufweist, sowie optische Sendevorrichtung.

Die Erfindung betrifft ein Verfahren zum Betreiben einer optischen Sendevorrichtung, die eine Mehrzahl von unabhängig ansteuerbaren Lasersendern aufweist, von denen mindestens einer zu einem betrachteten Zeitpunkt nicht betrieben wird und als redundanter Ersatz-Lasersender bereitsteht, sowie eine entsprechende optische Sendevorrichtung.

Es sind monolithische optoelektronische Chips bekannt, auf denen eine Mehrzahl unabhängig voneinander ansteuerbarer Laserdioden realisiert sind. Von der Mehrzahl der Laserdioden dient zu einem betrachteten Zeitpunkt eine der Laserdioden einer Datenkommunikation, während die anderen als redundante Laserdioden für den Fall vorgehalten werden, dass die aktuell verwendete Laserdiode ausfällt oder vorgegebene Qualitätskriterien insbesondere hinsichtlich der Lichtleistung unterschreitet.

Sofern die aktuell verwendete Laserdiode ausfällt oder vorgegebene Qualitätskriterien unterschreitet, wird auf eine andere der Laserdioden gewechselt und diese zur Datenkommunikation verwendet. Bei einem solchen Umschalten bzw. Wechseln zwischen einer bisher verwendeten Laserdiode und einer Ersatz-Laserdiode wird der Datenstrom für eine Zeitlang unterbrochen. Dabei gehen nachteilig Daten verloren. Auch muss der Datenkanal, nachdem die Ersatz-Laserdiode für die Datenkommunikation bereitsteht, wieder einsynchronisiert werden. Hierdurch wird Zeit verloren, was insbesondere bei sicherheitsrelevanten und zeitkritischen Übertragungen nachteilig ist.

Der vorliegenden Erfindung liegt die Aufgabe zugrunde, ein Verfahren zum Betreiben einer optischen Sendevorrichtung, die eine Mehrzahl von unabhängig ansteuerbaren Lasersendern aufweist, sowie eine solche Sendevorrichtung zur Verfügung zu stellen, die ein den Datenstrom nicht unterbrechendes Umschalten einer aktuell verwendeten Laserdiode auf eine redundante Ersatz-Laserdiode ermöglichen.

Diese Aufgabe wird erfindungsgemäß durch ein Verfahren mit den Merkmalen des Anspruchs 1 und eine optische Sendevorrichtung mit den Merkmalen des Anspruchs 7 gelöst. Bevorzugte und vorteilhafte Ausgestaltungen der Erfindung sind in den Unteransprüchen angegeben.

Danach zeichnet sich die Erfindung dadurch aus, dass bei einem Wechsel von einem bisher verwendeten Lasersender auf einen Ersatz-Lasersender der bisher verwendete Lasersender in seiner optischen Leistung stetig reduziert und gleichzeitig der Ersatz-Lasersender in seiner optischen Leistung stetig erhöht wird, so dass während einer Übergangszeit beide Sender Licht emittieren. Dies erlaubt ein den Datenstrom nicht unterbrechendes Umschalten von einem aktuell verwendeten Lasersender auf einen redundanten Lasersender.

Es wird darauf hingewiesen, dass das erfindungsgemäße Verfahren sowohl bei optischen Sendevorrichtungen einsetzbar ist, bei denen zu einem gegebenen Zeitpunkt nur einer der vorhandenen Lasersender für einen Kommunikationsbetrieb benutzt wird, während die übrigen Lasersender redundante Ersatz-Lasersender sind, als auch bei Sendevorrichtungen, bei denen zu einem betrachteten Zeitpunkt eine Mehrzahl der vorhandenen Lasersender aktuell zur Datenkommunikation betrieben werden (beispielsweise bei optischen Parallelverbindungen), wobei nur einer oder nur eine geringe Anzahl von redundanten Ersatz-Lasersendern für eine solche Mehrzahl gleichzeitig betriebener Lasersender bereitsteht. Ebenso ist das Verfahren bei einer optischen Sendevorrichtung einsetzbar, bei der zu einem betrachteten Zeitpunkt eine Mehrzahl von Lasersendern für einen Kommunikationsbetrieb eingesetzt werden und jedem dieser Lasersender eine oder mehrere redundante Ersatz-Lasersender zur Seite stehen.

In einer bevorzugten Ausgestaltung des erfindungsgemäßen Verfahrens ist vorgesehen, dass die optische Gesamtleistung beim Ersetzen des aktuell verwendeten Lasersenders durch den Ersatz-Lasersender kontant bleibt, sich die optische Gesamtleistung beider Laserdioden während der Übergangszeit somit nicht ändert. Mit anderen Worten wird die optische Leistung des Ersatz-Lasersenders in dem Maße erhöht, in dem die optische Leistung des bisher verwendeten Lasersenders reduziert wird. Der Übergang von dem bisher verwendeten Lasersender zum Ersatz-Lasersender bei konstanter Lichtleistung erfolgt dabei derart, dass auch die Lasermodulation (Datenübertragung) fehlerfrei erfolgt.

Zum Erreichen einer solchen konstanten Gesamt-Lichtleistung wird bevorzugt eine Laserregelung vorgesehen, die die optische Leistung der aktuell betriebenen und der mindestens einen redundanten Ersatz-Laserdiode gemeinsam erfasst und auf einen vorgegebenen Wert regelt. Da eine solche Laserregelung die optische Leistung sämtlicher Laserdioden betrachtet, führt eine Erhöhung der Lichtleistung des Ersatz-Lasersenders automatisch - d.h. aufgrund der Regelung - zu einer Reduktion der optischen Leistung des bisher verwendeten Lasersenders.

Bevorzugt wird als Parameter des Lasersenders, welcher auf ein zu erfüllendes Kriterium überprüft wird, der Laserstrom oder ein Wert, der den Laserstrom bestimmt, verwendet. Letzteres ist beispielsweise ein Strom- oder Spannungswert, der eine Stromquelle des Lasersenders steuert und insofern den Laserstrom repräsentiert. Grundsätzlich können aber auch andere Parameter des Lasersenders auf das Erfüllen eines vorgegebenen Kriteriums geprüft werden.

Im Falle des Laserstroms als betrachteten Parameter wird geprüft, ob der Laserstrom unterhalb eines vorgegebenen Schwellwerts liegt. Dies ist das vorgegebene Kriterium. Bei einer Verschlechterung der Qualität eines Lasers, d.h. bei einem Abnehmen seines Wirkungsgrades, benötigt er mehr Strom, um die gleiche Lichtmenge auszusenden. Sobald der Strom in einem solchen Fall über den vorgegebenen Schwellwert steigt, erfüllt er nicht mehr das vorgegebene Kriterium.

Der Laserstrom wird durch einen Lasertreiber bereitgestellt, der eine Laserdiode mit einem entsprechend dem zu übertragenen Datensignal modulierten Laserstrom versorgt. Ein Umschalten zwischen zwei Laserdioden geht dabei einher mit dem Umschalten der jeweils zugehörigen Lasertreiber. Zu einem Reduzieren der optischen Leistung des bisher verwendeten Lasersenders und zu einem Erhöhen der optischen Leistung des Ersatz-Lasersenders wird der jeweilige Laserstrom verringert bzw. erhöht und hierzu der jeweilige Lasertreiber entsprechend zunehmend oder abnehmend mit Strom versorgt wird, was insbesondere über die Steuerung einer Stromquelle des Lasertreibers erfolgt.

In einer weiteren bevorzugten Ausgestaltung wird das Reduzieren der optischen Leistung des bisher verwendeten Lasersenders und das Erhöhen der optischen Leistung des Ersatz-Lasersenders während der Übergangszeit durch den Aufladevorgang einer ersten Kapazität und den Entladevorgang einer zweiten Kapazität gesteuert. Die Lade- und Entladezeit der Kapazitäten bestimmt die Übergangszeit, in der beide Lasersender eine optische Leistung bereitstellen.

Insbesondere sind bevorzugt folgende Schritte vorgesehen:
- Aufladen der ersten Kapazität, wenn im Prüfschritt festgestellt wird, dass der Laserstrom das vorgegebene Kriterium nicht erfüllt, wobei die an der ersten Kapazität anliegende Spannung während des Aufladevorgangs den Laserstrom durch den Ersatz-Lasersender steuert,
- dabei Bereitstellung einer Lichtleistung des Ersatz-Lasersenders und stetiges Erhöhen dieser Lichtleistung,
- dabei stetiges Reduzieren der Lichtleistung des bisher verwenderen Lasersenders aufgrund der gemeinsamen Regelung der Lasersender,
- Entladen der zweiten Kapazität, sobald der Laserstrom durch den Ersatz-Lasersender größer ist als der Laserstrom durch die bisher verwendete Laserdiode, wobei die an der zweiten Kapazität anliegende Spannung während des Entladevorgangs den Laserstrom durch den bisher verwendeten Lasersender steuert. Nach Entladen der zweiten Kapazität wird nur noch die Ersatz-Laserdiode betrieben; der Wechsel ist abgeschlossen.

Das Umschalten der Regelung von einem zum nächsten Lasertreiber erfolgt vorzugsweise und der Einfachheit halber, wenn beide Spannungen an den Kondensatoren gleich sind. Es können aber auch andere Umschalt-Kriterien festgelegt werden.

Die erfindungsgemäße optische Sendevorrichtung weist Mittel zum Ersetzen des aktuell für den Kommunikationsbetrieb verwendeten Lasersenders durch einen Ersatz-Lasersender auf, wobei diese Mittel den aktuell verwendeten Lasersender in seiner optischen Leistung reduzieren und gleichzeitig den Ersatz-Lasersender in seiner optischen Leistung erhöhen, so dass während einer Übergangszeit beide Sender Licht emittieren.

Die optische Sendevorrichtung weist zusätzlich bevorzugt eine Laserregelung auf, die die optische Leistung des aktuell betriebenen und des mindestens einen redundanten Ersatz-Lasersenders gemeinsam erfasst und auf einen vorgegebenen Wert regelt, so dass die Gesamt-Lichtleistung der beider Lasersenders während der Übergangszeit im wesentlichen konstant gehalten wird. Die Laserregelung wird beispielsweise durch eine Monitordiode und einen Regelverstärker bereitgestellt, wie es an sich bekannt ist.

Falls keine gemeinsame Monitordiode vorhanden ist, können auch für jeden Laser separate Monitordioden parallel geschaltet werden und auf einen gemeinsamen Widerstand arbeiten.

Die Mittel zum Ersetzen des aktuell für den Kommunikationsbetrieb verwendeten Lasersenders durch einen Ersatz-Lasersender weisen bevorzugt auf:
- eine Schaltermatrix mit einer Mehrzahl von Schaltern und Stromquellen,
- eine Mehrzahl von Kapazitäten, die in Abhängigkeit von der Stellung der Schalter geladen oder entladen werden können, wobei jeweils eine Kapazität einem Lasersender zugeordnet ist, und
- eine Steuerlogik, die die Schalter der Schaltermatrix steuert.
Dabei wird über ein Laden und Entladen der dem aktuell verwendeten Lasersender und dem Ersatz-Lasersender zugeordneten Kapazitäten ein stetiges Reduzieren der optischen Leistung des aktuell verwendeten Lasersender und ein gleichzeitiges stetiges Erhöhen der optischen Leistung des Ersatz-Lasersenders bereitgestellt. Hierzu werden die Schalter der Schaltermatrix bevorzugt derart geschaltet, dass die an der jeweiligen Kapazität anliegende Spannung während der Übergangszeit eine Stromquelle, die den Lasersender mit Strom versorgt, steuert.

Alternativ kann natürlich auch eine andere Steuerung für das Steuern der Laserströme (Absenken und Hochfahren) zur Anwendung kommen, z.B. eine voll digitale Ansteuerung der Laser mittels Digital-Analog-Wandler.

In einer bevorzugten Ausgestaltung weisen die Mittel zum Prüfen einen ersten Komparator auf, der Teil der Steuerlogik ist und der den Laserstrom eines ersten (aktuell verwendeten) Lasersenders oder einen Wert, der diesen Laserstrom bestimmt, mit einem Referenzwert vergleicht, wobei das Ergebnis des Vergleichs einer Decoderlogik der Steuerlogik mitgeteilt wird. Bevorzugt ist dabei entsprechend der Anzahl der Ersatz-Laserdioden mindestens ein weiterer erster Komparator vorgesehen, wobei jeder weitere erste Komparator den Laserstrom eines weiteren Lasersenders (der zunächst ein Ersatz-Lasersender ist, aber zu dem aktuell verwendeten Lasersender werden kann) oder einen Wert, der diesen Laserstrom bestimmt, mit einem Referenzwert vergleicht und das Ergebnis des Vergleichs der Decoderlogik mitgeteilt wird.

Bevorzugt ist des weiteren ein zweiter Komparator vorgesehen, der den Laserstrom durch einen ersten (aktuell verwendeten) Lasersender und den Laserstrom durch einen zweiten, Ersatz-Lasersender (der gerade hochgefahren wird) oder Werte, die diese Laserströme bestimmen, miteinander vergleichen kann, wobei das das Ergebnis des Vergleichs der Decoderlogik mitgeteilt wird. Dabei sind in Abhängigkeit von der Anzahl der redundanten Lasersender ggf. weitere zweite Komparatoren vorgesehen, die jeweils Laserströme von Lasersendern miteinander vergleichen, wobei das Ergebnis des Vergleichs jeweils der Decoderlogik mitgeteilt wird, die hieraus Steuerbefehle zum Schalten der Schalter der Schaltermatrix erzeugt.

Die genannten Komparatoren sind bevorzugt jeweils über einen RS-Flip-Flop mit der Decoderlogik verbunden. Der RS-Flip-Flop hält den Zustand des Komparators fest und gibt ein entsprechendes Signal an die Decoderlogik. In einer bevorzugten Ausgestaltung ist der RS-Flip-Flop dabei jeweils als nichtflüchtiger Speicher ausgebildet. Dies weist den Vorteil auf, dass die Stellung der RS-Flip-Flops auch nach einem Abschalten der Versorgungsspannung erhalten bleibt und die Steuerlogik bei einem erneuten Anschalten der Versorgungsspannung sogleich den zuletzt betriebenen Lasersender anschalten kann.

Bevorzugt weist jeder Lasersender eine Laserdiode und eine zugeordnete Treiberschaltung auf, wobei die Schalter der Schaltermatrix durch die Steuerlogik derart eingestellt werden können, dass die einem Lasersender jeweils zugeordnete Kapazität während ihres Aufladevorgangs oder während ihres Entladevorgangs die Stromversorgung der Treiberschaltung steuert. Hierzu ist insbesondere vorgesehen, dass die an der Kapazität anliegende Spannung eine Stromquelle steuert, die die Treiberschaltung mit Strom versorgt.

In einer bevorzugten Ausgestaltung erzeugt und empfängt eine Decoderlogik der Steuerlogik Steuersignale wie folgt:
- wenn die Mittel zum Prüfen feststellen, dass der betrachetete Parameterwert des aktuell verwendeten Lasersenders das vorgegebene Kriterium nicht erfüllt, empfängt sie ein entsprechendes erstes Steuersignal (das durch einen der ersten Komparatoren oder einen diesem zugeordneten RS-Flip-Flop erzeugt wird),
- für diesen Fall erzeugt sie ein zweites Steuersignal zur Umlegung eines Schalters derart, dass die dem Ersatz-Lasersender zugeordnete Kapazität durch eine der Stromquellen aufgeladen wird,
- wenn die Laserströme durch den aktuell verwendeten Lasersender und den Ersatz-Lasersender gleich sind, empfängt sie ein entsprechendes drittes Steuersignals (das durch einen der zweiten Komparatoren oder einen diesem zugeordneten RS-Flip-Flop erzeugt wird),
- für diesen Fall erzeugt sie ein viertes Steuersignal zur Umlegung eines Schalters derart, dass die dem aktuell verwendeten Lasersender zugeordnete Kapazität entladen wird, und ein fünftes Steuersignal zur Umlegung eines Schalters derart, dass dem Ersatz-Lasersender das Regelsignal der Laserregelung zugeführt wird. Das Regelsignal der Laserregelung bestimmt im Betrieb den Laserstrom des aktuell verwendeten Lasersenders.

Die erfindungsgemäße Sendevorrichtung weist des weiteren bevorzugt eine RESET-Schaltung auf, die sämtliche Schalter der Schaltermatrix in eine definierte Anfangsstellung bringt. Die RESET-Schaltung definiert den Startfall bei Anschalten der Versorgungsspannung.

Die Erfindung wird nachfolgend unter Bezugnahme auf die Figuren der Zeichnung anhand eines Ausführungsbeispieles näher erläutert. Es zeigen:
- Figur 1: eine Schaltung einer optischen Sendevorrichtung mit einer Mehrzahl von unabhängig ansteuerbaren Laserdioden, einer Mehrzahl von Lasertreibern, einem Regelverstärker, einer Schaltermatrix mit Schaltern und Stromquellen sowie einer Steuerlogik;
- Figur 2: ein Ausführungsbeispiel einer im Stand der Technik bekannten Lasertreiberschaltung;
- Figur 3: ein Ausführungsbeispiel der Steuerlogik der Sendevorrichtung der Figur 1;
- Figur 4: den Signalverlauf der Laserströme, der Steuersignale der Steuerlogik sowie des Schaltungszustandes der Schalter der Schaltermatrix der Sendevorrichtung der Fig. 1; und
- Figur 5: den Übergang der Treiberströme der Laserdioden der Sendevorrichtung der Figur 1 beim Wechseln von einer aktuell verwendeten Laserdiode auf eine redundante Laserdiode.

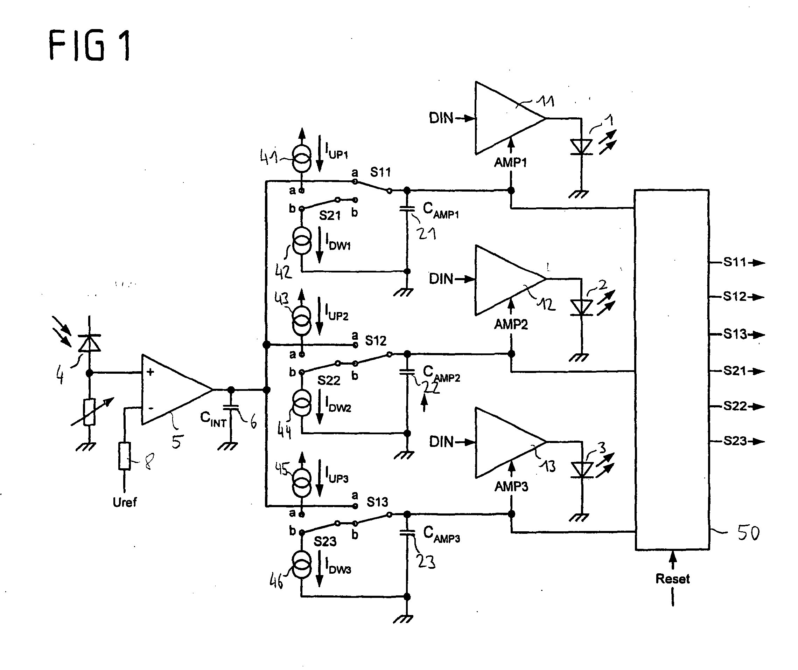

Die Figur 1 zeigt eine optische Schaltung mit drei Laserdioden 1, 2, 3, zugehörigen Lasertreibern 11, 12, 13, einer Schaltermatrix mit Stromquellen 41-46 und Schaltern S11, S21, S12, S22, S13, S23, drei Kondensatoren 21, 22, 23 (C_{AMP1}, C_{AMP2}, C_{AMP3}), einer Laserregelung 4, 5, 6 und einer Steuerlogik 50 auf.

Die Laserregelung besteht aus einer Monitor-Fotodiode 4 und einem Regelverstärker (Integrator), der sich aus einem Operationsverstärker 5 und einer Kapazität 6 (C_{INT}) zusammensetzt. Dem Operationsverstärker 5 wird an seinem invertierenden Eingang über einen Widerstand 8 eine Referenzspannung Uref zugeführt. Die Monitordiode 4 detektiert das Licht sämtlicher lichtemittierender Laserdioden 1, 2, 3 gemeinsam.

Die Schaltermatrix bildet drei Untergruppen, eine erste Untergruppe mit Schaltern S11, S21 und Stromquellen 41, 42, die dem ersten Lasertreiber 11 zugeordnet ist, eine zweite Untergruppe mit Schaltern S12, S22 und Stromquellen 43, 44, die dem zweiten Lasertreiber 12 zugeordnet ist und eine dritte Untergruppe mit Schaltern S13, S23 und Stromquellen 45, 46, die dem dritten Lasertreiber 13 zugeordnet ist. Jeder Schalter ist in einer von zwei möglichen Positionen a, b.

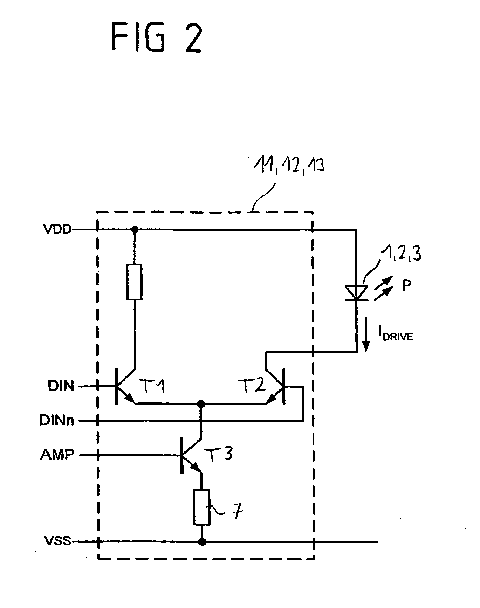

Die Schalter S11, S12, S13 legen in der Position a das Ausgangssignal der Laserregelung auf einen Anschlußpin AMP1, AMP2, AMP3 des jeweiligen Lasertreibers 11, 12, 13, über den die Stromversorgung des jeweiligen Lasertreibers 11, 12, 13 eingestellt wird, wie anhand der Figur 2 erläutert werden wird. Die Schalter S11, S12, S13 ermöglichen in der Position b zusammen mit den weiteren Schaltern S21, S22, S23, die Kondensatoren 21, 22, 23 durch die Stromquellen 41-46 zu laden oder zu entladen.

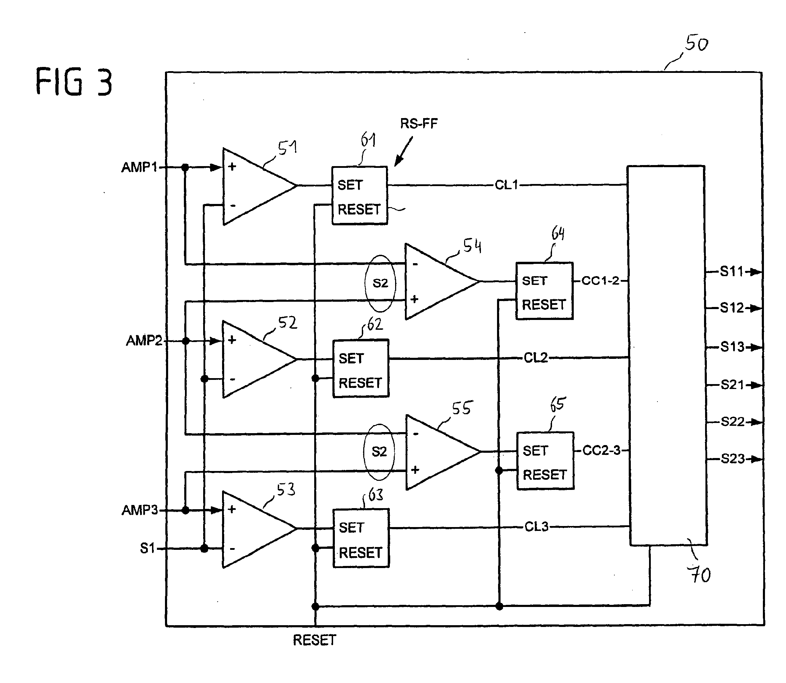

Die Steuerlogik 50, die anhand der Figuren 3 bis 5 erläutert werden wird, generiert Steuersignale zur Steuerung der Stellung der Schalter S11, S12, S13, S21, S22 und S23 der Schaltermatrix.

Die Figur 2 zeigt ein Ausführungsbeispiel einer Treiberschaltung 11, 12, 13. Die Laserdiode 1, 2, 3 wird im betrachteten Ausführungsbeispiel mit einem differenziellen Datensignal DIN, DINn beaufschlagt wird. Das Datensignal DIN und das dazu invertierte Datensignal DINn werden an die Basis-Anschlüsse zweier Transistoren T1, T2 eines Differenzverstärkers angeschlossen. Die beiden Emitter-Anschlüsse der Transistoren T1, T2 sind zusammengeschaltet und mit dem Kollekter-Anschluss eines weiteren Transistors T3 verbunden, dessen Emitter-Anschluss über einen Widerstand 7 mit der Versorgungsspannung VSS verbunden ist. Die Basisspannung wird durch den Spannungswert AMP eingestellt. Der Transistor T3 dient dabei als Stromquelle für die Treiberschaltung, wobei über die Basisspannung AMP die Größe des Stroms durch die Treiberschaltung eingestellt wird. Durch die Laserdiode 1, 2, 3 fließt der Laserstrom I_{DRIVE}. Eine solche Treiberschaltung ist an sich bekannt.

Die verwendeten Transistoren können statt als BipolarTransistoren auch als Feldeffekt-Transistoren ausgebildet sein.

Die in der Figur 3 dargestellte Steuerlogik 50 weist fünf Komperatoren 51-55, jeweils am Ausgang der Komperatoren angeordnete RS-Flip-Flops 61-65 sowie eine Decoder-Logik 70 auf. Die Komperatoren 51, 52, 53 vergleichen die Signalpegel an den Pins AMP1, AMP2, AMP3 der Lasertreiber 11, 12, 13, die an dem nichtinvertierenden Eingang anliegen, jeweils mit einem Referenz-Signalpegel S1 an dem invertierenden Eingang. Die weiteren Komperatoren 24, 25 vergleichen die Signalpegel an den Pins AMP1, AMP2 bzw. die Signalpegel an den Pins AMP2, AMP3.

Im folgenden wird zur Vereinfachung nicht mehr zwischen den Pins AMP1, AMP2, AMP3 der Lasertreiber 11, 12, 13 und den an diesen anliegenden Signalen bzw. Spannungen unterschieden, d.h. die an den Pins anliegenden Signale werden ebenfalls mit AMP1, AMP2, AMP3 bezeichnet.

Die RS-Flip-Flops 61-65 halten den jeweiligen Zustand des zugeordneten Komperators 51-55 fest und geben ein entsprechendes logisches Steuersignal CL1, CL2, CL3, CC1-2 und CC2-3 an die Decoder-Logik 30. CLx steht dabei für "Current Limit Channel x", ist also ein Steuersignal, das zu einer Stromreduktion für den Kanal/Laser x führt. CLx-y steht für "Current Crossing channel x→y", ist also ein Steuersignal betreffend den Übergang von Kanal/Laser x zum Kanal/Laser y.

Die Decoder-Logik 70, die als Eingänge die Signale CL1, CL2, CL3, CC1-2 und CC2-3 erhält und als Ausgänge Steuersignale zur Stellung der Schalter S11, S21, S12, S22, S13 und S23 in die Positionen a oder b ausgibt, erzeugt anhand der nachfolgenden Logiktabelle die entsprechenden Steuersignale:

| Status | CL1 | CL2 | CL3 | CC1-2 | CC2-3 | S11 | S21 | S12 | S22 | S13 | S23 | Laserstatus |
|---|---|---|---|---|---|---|---|---|---|---|---|---|
| 0 | 0 | 0 | 0 | 0 | 0 | a | x | b | b | b | b | Laser 1 |
| 1 | 1 | 0 | 0 | 0 | 0 | a | x | b | a | b | b | Laser 1, 2 |
| 2 | 1 | 0 | 0 | 1 | 0 | b | b | a | b | b | b | Laser 2 |
| 3 | 1 | 1 | 0 | 1 | 0 | b | b | a | b | b | a | Laser 2, 3 |
| 4 | 1 | 1 | 0 | 1 | 1 | b | b | b | b | a | b | Laser 3 |
| 5 | 1 | 1 | 1 | 1 | 1 | b | b | b | b | b | b | Alle Laser tot |

Der Status 0 liegt dabei nach einem RESET der Schaltung vor und stellt den Ausgangszustand dar. Die Schalterstellung "x" bedeutet, dass der Schalter sich in der Position a oder b befinden kann. Der Laserstatus gibt an, ob sich der Laser 1 in einem geregelten Zustand befindet (mit Laser 2 und 3 aus), der Laser 2 in einem geregelten Zustand befindet (mit Laser 1 und 3 aus), der Laser 3 in einem geregelten Zustand befindet (mit Laser 1 und 2 aus), oder gerade ein Wechseln der Laser von Laser 1 auf Laser 2 oder von Laser 2 auf Laser 3 stattfindet.

Die Funktionsweise der Schaltung ist wie folgt.

Im Startfall sind alle Schalter der Fig. 1 in der Stellung b, nur der Schalter S11 ist auf die Stellung a eingestellt. Dies wird über eine entsprechende RESET-Schaltung (zum Beispiel power on reset beim Einschalten der Versorgungsspannung) erreicht. Die Lasertreiber 12, 13 sind abgeschaltet, da der PIN "AMPx" über die Stromquellen 44, 46 am Schalter S22, S23 mit Strömen IDWₓ entladen wird und die Lasertreiber 12, 13 keinen Strom mehr liefern. Über die Regelung mittels der Monitordiode 4 stellt der Regelverstärker (Integrator) 5, 6 nun die Spannung am Pin AMP1 derart ein, dass die optische Leistung den Vorgaben entspricht, welche beispielsweise über die Referenzspannung Uref, den Widerstand an der Monitordiode 4 sowie dem Monitorstrom vorgegeben wird. Dies ist eine an sich bekannte Art der Laserregelung.

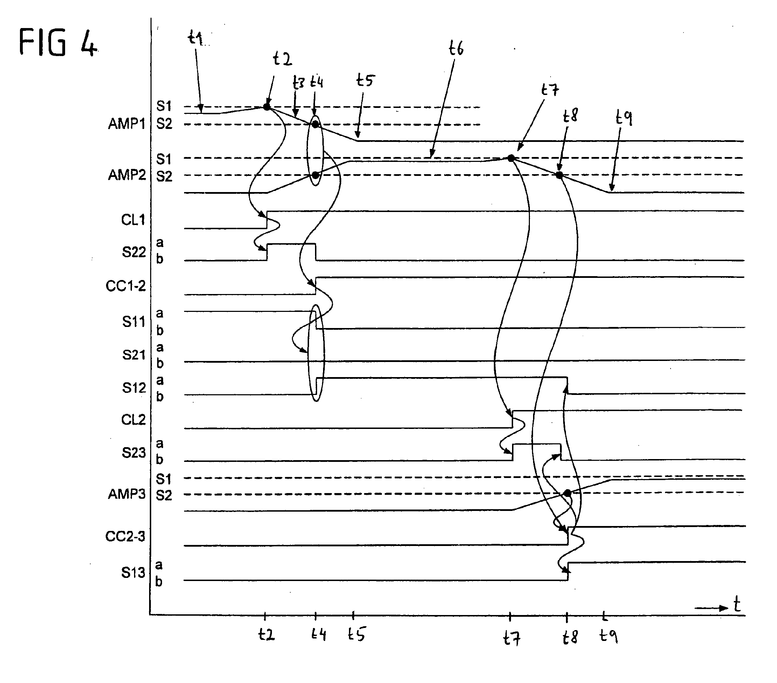

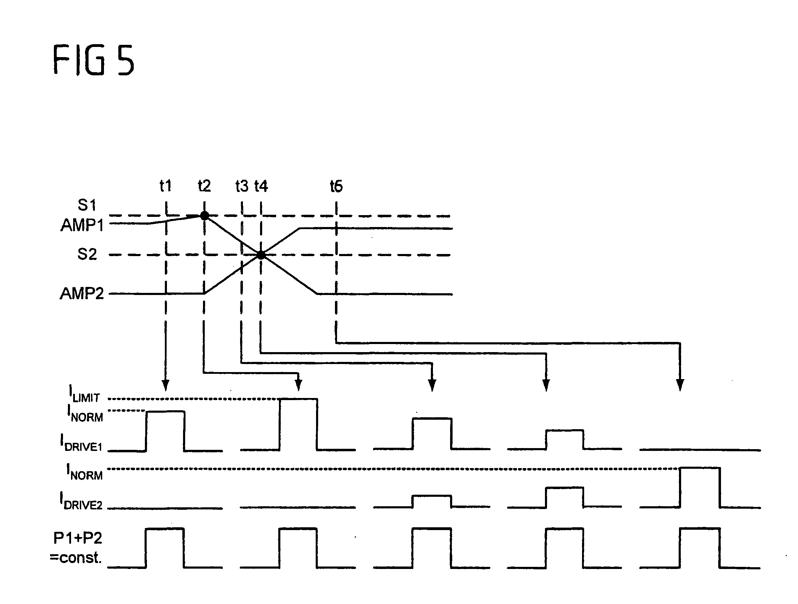

Wird nun der Laser 1 mit zunehmender Betriebszeit schlechter, d.h. sein Wirkungsgrad nimmt ab und er benötigt mehr Strom, um die gleiche Lichtmenge auszusenden, so steigt sein Strom über eine vorgegebene Schwelle I_{LIMIT}. Diese Schwelle wird über den Pegel S1 in der Fig. 3 eingestellt, wobei der Laserstrom durch den Pegel AMP1 repräsentiert wird (siehe auch Figuren 4 und 5). Der Komparator 51 triggert das folgende RS-Flip-Flop 61, welches den Zustand des Komparators 51 festhält und das Signal CL1 setzt. Durch dieses Signal wird der Schalter S22 mittels der Decoder-Logik 70 auf die Position a gesetzt. Dies führt dazu, dass der Kondensator 22 C_{AMP2} durch die Stromquelle 43 mit dem Strom I_{UP2} aufgeladen wird. Der jeweilige Kondensator C_{AMPx} ist dabei wichtig, da er beim Umschalten der Schalter S₁ₓ und S₂ₓ den Spannungsknoten AMPx konstant hält.

Durch das ansteigende Signal AMP2 wird nun der Lasertreiber 2 (und damit die Laserdiode 2) allmählich mit Strom versorgt: die Laserdiode 2 beginnt, Licht auszusenden. Durch die noch immer den Kanal 1/Laser 1 kontrollierende Regelung wird dort der Strom im gleichen Ausmaß reduziert, da durch die Laserregelung alle Laser auf die gemeinsame Monitor-Photodiode 4 strahlen.

Sind die beiden Ströme der Lasertreiber 1 und 2 gleich (AMP1 = AMP2), so wird durch den Komparator 52, welcher die Signale AMP 1 und AMP2 vergleicht, das Signal CC1-2 gesetzt. Dadurch werden der Schalter S11 auf die Position b und der Schalter 12 auf die Position a umgeschaltet, womit die Laserregelung nun auf dem zweiten Kanal/Laser 2 wirkt. Der Kapazität 21 wird durch die nun entladende Stromquelle 42 mit dem Strom I_{DW1} allmählich entladen, so dass die Spannung an AMP 1 weiter absinkt und damit auch die optische Leistung des Lasers 1. Bei vollständiger Entladung der Kapazität 21 ist allein der zweite Kanal aktiv.

Eine Umschaltung auf die dritte Laserdiode (oder weitere Laserdioden) erfolgt in entsprechender Weise.

Die entsprechenden Signalverläufe sind in der Figur 4 dargestellt.

Zunächst (Zeiten t1) befindet sich der Laserstrom der Laserdiode 1 unterhalb eines vorgegebenen Grenzwertes. Aufgrund der vorgenommenen Regelung liegt dabei der Wert der Spannung AMP1, der den Strom durch den Lasertreiber und damit den Laserstrom bestimmt, unterhalb des Schwellwertes S1. Bei einer Verschlechterung des Wirkungsgrads der Laserdiode infolge eines Alterungsprozesses erreicht die Laserdiode 1 zum Zeitpunkt t2 den definierten Grenzwert und das Signal AMP1 den Schwellwert S1. Das Signal CL1 des RS-Flip-Flops 61 springt gemäß Figur 3 auf einen anderen logischen Wert. Dieser andere logische Wert von CL1 bewirkt, dass die Decoder-Logik 70 ein Signal zum Umstellen des Schalters S22 ausgibt, so dass dieser zum Zeitpunkt t2 ebenfalls umgeschaltet wird, wie in Figur 4 dargestellt.

Es erhöht sich während der Zeiten t3 nun der Laserstrom der Ersatz-Laserdiode 2 und in gleichem Maße reduziert sich der Laserstrom der Laserdiode 1.

Zum Zeitpunkt t4 sind diese beiden Ströme gleich groß. Der dem Komperator 54 zugeordnete RS-Flip-Flop 64 gibt dem Signal CC1-2 daraufhin einen anderen logischen Wert. Dies wiederum führt zu einem Umlegen der Schalter S11 (in Position b), S12 (in Position a) und S22 (in Position b). Zum Zeitpunkt t5 ist der Laserstrom der Laserdiode 1 auf den Wert Null gesunken und der Laserstrom durch die Laserdiode 2 (und dementsprechend das Signal AMP2) auf einem maximalen Wert.

Das zu übertragende Datensignal wird nun während der Zeiten t6 ausschließlich durch die Laserdiode 2 übertragen. Sofern mit zunehmender Alterung auch der Wirkungsgrad der Laserdiode 2 abnimmt, wiederholt sich der Vorgang zu den Zeitpunkten t7, t8, t9 in entsprechender Weise, wobei nunmehr ein langsames Umschalten von der Laserdiode 2 auf die Laserdiode 3 erfolgt.

Die Fig. 5 zeigt detailliert den Übergang der Treiber-Ströme I_{DRIVE1} und I_{DRIVE1} der Lasertreiber 11, 12 (oder der Lasertreiber 12 und 13) in Zusammenhang mit den Steuersignalen AMP1 und AMP2 und in Abhängigkeit von den Zeiten t1, t2, t3, t4, t6 der Fig. 4. Der Pegel S2 ist nur ein Hilfspegel, um die Funktionsweise zu verdeutlichen. Bei dem Pegel S2 sind die Signale AMP1 und AMP2 gleich groß. Die Umschaltung erfolgt im direkten Vergleich der jeweiligen Pegel AMPx und AMPx+1 durch die Komparatoren 54, 55.

Wird der Laser 1 beispielsweise durch ein Laser-Enable-Signal oder auch durch fehlende Eingangsdaten (Signal-Detect für Dateneingang) bei angeschalteter Versorgungsspannung abgeschaltet, so bleibt die Stellung der RS-Flip-Flops 61-65 bestehen und die Steuerlogik 50 schaltet sofort den zuletzt betriebenen Laser an. Bei Abschalten der Versorgungsspannung geht die entsprechende Information jedoch verloren, die Schaltung durchläuft alle Laser von vorne. In einer Ausgestaltung werden die RS-Flip-Flops 61-65 daher als nichtflüchtiger Speicher (non volatile memory (zum Beispiel flash, EEPROM, FusePROM etc.)) ausgelegt. Die Stellung der RS-Flip-Flops kann dann auch nach dem Abschalten der Versorgungsspannung erhalten bleiben und somit die Steuerlogik 50 den zuletzt betriebenen Laser anschalten.

## Patentansprüche

1. Verfahren zum Betreiben einer optischen Sendevorrichtung, die eine Mehrzahl von unabhängig ansteuerbaren Lasersendern aufweist, von denen mindestens einer zu einem betrachteten Zeitpunkt nicht betrieben wird und als redundanter Ersatz-Lasersender bereitsteht, **gekennzeichnet durch** die Schritte:
- Prüfen, ob ein Parameterwert eines Parameters eines aktuell für einen Kommunikationsbetrieb eingesetzten Lasersenders (1) ein vorgegebenes Kriterium erfüllt,
- sofern der Parameterwert das vorgegebene Kriterium nicht erfüllt, Ersetzen des aktuell für den Kommunikationsbetrieb verwendeten Lasersenders (1) **durch** einen Ersatz-Lasersender (2), wobei hierzu
- der bisher verwendete Lasersender (1) in seiner optischen Leistung reduziert und gleichzeitig der Ersatz-Lasersender (2) in seiner optischen Leistung erhöht wird, so dass während einer Übergangszeit (t5-t2) beide Sender (1, 2) Licht emittieren,
- Verwenden des Ersatz-Lasersenders (2) für den weiteren Kommunikationsbetrieb nach Ablauf der Übergangszeit.

2. Verfahren nach Anspruch 2, **dadurch gekennzeichnet, dass** der Übergang von dem bisher verwendeten Lasersender (1) zum Ersatz-Lasersender (2) bei konstanter Lichtleistung derart erfolgt, dass auch die Lasermodulation (Datenübertragung) fehlerfrei erfolgt.

3. Verfahren nach Anspruch 2, **dadurch gekennzeichnet, dass** durch eine Laserregelung (4, 5, 6), die die optische Leistung des aktuell betriebenen und des mindestens einen redundanten Ersatz-Lasersenders gemeinsam erfasst und auf einen vorgegebenen Wert regelt, die Gesamt-Lichtleistung des bisher verwendeten Lasersenders und des Ersatz-Lasersenders während der Übergangszeit konstant gehalten wird.

4. Verfahren nach mindestens einem der vorangehenden Ansprüche, **dadurch gekennzeichnet, dass** als Parameter des Lasersenders der Laserstrom oder ein Wert (AMP1, AMP2, AMP3), der den Laserstrom bestimmt, verwendet wird.

5. Verfahren nach mindestens einem der vorangehenden Ansprüche, **dadurch gekennzeichnet, dass** das Reduzieren der optischen Leistung des bisher verwendeten Lasersender (1) und das Erhöhen der optischen Leistung des Ersatz-Lasersenders (2) während der Übergangszeit (t5-t2) durch den Aufladevorgang einer ersten Kapazität (22) und den Entladevorgang einer zweiten Kapazität (21) gesteuert wird.

6. Verfahren nach den Ansprüche 3, 4 und 5, **gekennzeichnet durch** die weiteren Schritte:
- Aufladen der ersten Kapazität (22), wenn im Prüfschritt festgestellt wird, dass der Laserstrom das vorgegebene Kriterium nicht erfüllt, wobei die an der ersten Kapazität (22) anliegende Spannung während des Aufladevorgangs den Laserstrom **durch** den Ersatz-Lasersender (2) steuert,
- dabei Bereitstellung einer Lichtleistung des Ersatz-Lasersenders (2) und stetiges Erhöhen dieser Lichtleistung,
- dabei stetiges Reduzieren der Lichtleistung des bisher verwenderen Lasersenders (1) aufgrund der gemeinsamen Regelung der Lasersender,
- Entladen der zweiten Kapazität (21), sobald der Laserstrom **durch** den Ersatz-Lasersender (2) größer ist als der Laserstrom **durch** den bisher verwendete Lasersender (1), wobei die an der zweiten Kapazität (21) anliegende Spannung während des Entladevorgangs den Laserstrom **durch** den bisher verwendeten Lasersender (1) steuert,
- wobei nach Entladen der zweiten Kapazität (21) nur noch die Ersatz-Laserdiode (2) betrieben wird.

7. Optische Sendevorrichtung, die eine Mehrzahl von unabhängig ansteuerbaren Lasersendern aufweist, von denen mindestens einer zu einem betrachteten Zeitpunkt nicht betrieben wird und als redundanter Ersatz-Lasersender bereitsteht,
**gekennzeichnet durch**
- Mittel zum Prüfen (51-53), ob ein Parameterwert eines Parameters eines aktuell für einen Kommunikationsbetrieb eingesetzten Lasersenders (1) ein vorgegebenes Kriterium erfüllt,
- Mittel zum Ersetzen des aktuell für den Kommunikationsbetrieb verwendeten Lasersenders (1) **durch** einen Ersatz-Lasersender (2), sofern der Parameterwert das vorgegebene Kriterium nicht erfüllt, wobei
- die Mittel zum Ersetzen den aktuell verwendeten Lasersender (1) in seiner optischen Leistung reduzieren und gleichzeitig den Ersatz-Lasersender (2) in seiner optischen Leistung erhöhen, so dass während einer Übergangszeit (t5-t2) beide Sender Licht emittieren.

8. Vorrichtung nach Anspruch 7, **gekennzeichnet durch** eine Laserregelung (4, 5, 6), die die optische Leistung des aktuell betriebenen und des mindestens einen redundanten Ersatz-Lasersenders gemeinsam erfasst und auf einen vorgegebenen Wert regelt, wobei die Gesamt-Lichtleistung der beider Lasersenders (1, 2) während der Übergangszeit (t5-t2) im wesentlichen konstant gehalten und eine fehlerfreie Übertragung gewährleistet wird.

9. Vorrichtung nach Anspruch 7 oder 8, **dadurch gekennzeichnet, dass** die Mittel zum Ersetzen aufweisen:
- eine Schaltermatrix mit einer Mehrzahl von Schaltern (S11, S21, S12, S22, S13, S23) und Stromquellen (41-46),
- eine Mehrzahl von Kapazitäten (21, 22, 23), die in Abhängigkeit von der Stellung der Schalter (S11, S21, S12, S22, S13, S23) geladen oder entladen werden können, wobei jeweils eine Kapazität (21, 22, 23) einem Lasersender (1, 2, 3) zugeordnet ist,
- eine Steuerlogik (50), die die Schalter der Schaltermatrix steuert,
- wobei über ein Laden und Entladen der dem aktuell verwendeten Lasersender (1) und dem Ersatz-Lasersender (2) zugeordneten Kapazitäten (21, 22) ein stetiges Reduzieren der optischen Leistung des aktuell verwendeten Lasersender (1) und ein gleichzeitiges stetiges Erhöhen der optischen Leistung des Ersatz-Lasersenders (2) bereitgestellt wird.

10. Vorrichtung nach Anspruch 9, **dadurch gekennzeichnet, dass** die Mittel zum Prüfen einen ersten Komparator (51) aufweisen, der Teil der Steuerlogik (50) ist und der den Laserstrom eines ersten Lasersenders (1) oder einen Wert (AMP1), der diesen Laserstrom bestimmt, mit einem Referenzwert (S1) vergleicht, wobei das Ergebnis des Vergleichs einer Decoderlogik (70) der Steuerlogik (50) mitgeteilt wird.

11. Vorrichtung nach Anspruch 10, **dadurch gekennzeichnet, dass** die Mittel zum Prüfen mindestens einen weiteren ersten Komparator (52, 53) aufweisen, wobei jeder weitere erste Komparator (52, 53) den Laserstrom eines weiteren Lasersenders (2, 3) oder einen Wert (AMP1, AMP2), der diesen Laserstrom bestimmt, mit einem Referenzwert (S1) vergleicht, wobei das Ergebnis des Vergleichs der Decoderlogik (70) mitgeteilt wird.

12. Vorrichtung nach einem der Ansprüche 9 bis 11, **gekennzeichnet durch** einen zweiten Komparator (54), der den Laserstrom **durch** einen ersten Lasersender und den Laserstrom **durch** einen zweiten, Ersatz-Lasersender oder Werte (AMP1, AMP2), die diese Laserströme bestimmen, miteinander vergleicht, wobei das das Ergebnis der Vergleichs einer Decoderlogik (70) der Steuerlogik (50) mitgeteilt wird.

13. Vorrichtung nach Anspruch 12, **gekennzeichnet durch** mindestens einen weiteren zweiten Komparator (55), der die Laserströme von Lasersendern (2, 3) miteinander vergleicht, wobei das das Ergebnis der Vergleichs der Decoderlogik (70) mitgeteilt wird.

14. Vorrichtung nach einem der Ansprüche 10 bis 13,
**dadurch gekennzeichnet, dass** jeder Komparator (51-55) über einen RS-Flip-Flop (61-65) mit der Decoderlogik (70) verbunden ist, wobei der RS-Flip-Flop den Zustand des Komparators festhält und ein entsprechendes Signal an die Decoderlogik gibt.

15. Vorrichtung nach Anspruch 14, **dadurch gekennzeichnet, dass** der RS-Flip-Flop (61-65) jeweils als nichtflüchtiger Speicher ausgebildet ist.

16. Vorrichtung nach einem der Ansprüche 9 bis 15,
**dadurch gekennzeichnet, dass** jeder Lasersender eine Laserdiode (1, 2, 3) und eine zugeordnete Treiberschaltung (11, 12, 13) aufweist, wobei die Schalter (S11, S21, S12, S22, S13, S23) der Schaltermatrix durch die Steuerlogik (50) derart eingestellt werden können, dass die einem Lasersender jeweils zugeordnete Kapazität (21, 22, 23) während ihres Aufladevorgangs oder während ihres Entladevorgangs die Stromversorgung der Treiberschaltung (11, 12, 13) steuert.

17. Vorrichtung nach Anspruch 8 und einem der Ansprüche 9 bis 16, **dadurch gekennzeichnet, dass** eine Decoderlogik (70) der Steuerlogik (50) Steuersignale wie folgt erzeugt und empfängt:
- wenn die Mittel zum Prüfen feststellen, dass der betrachetete Parameterwert des aktuell verwendeten Lasersenders das vorgegebene Kriterium nicht erfüllt, Empfang eines entsprechenden ersten Steuersignals (CL1),
- für diesen Fall Erzeugung eines zweiten Steuersignals zur Umlegung eines Schalters (S22) derart, dass die dem Ersatz-Lasersender (2) zugeordnete Kapazität (22) durch eine der Stromquellen aufgeladen wird,
- wenn die Laserströme durch den aktuell verwendeten Lasersender (1) und den Ersatz-Lasersender (2) gleich sind, Empfangen eines entsprechenden dritten Steuersignals (CC1-2),
- für diesen Fall Erzeugung eines vierten Steuersignals zur Umlegung eines Schalters (S11) derart, dass die dem aktuell verwendeten Lasersender (1) zugeordnete Kapazität (21) entladen wird, und Erzeugung eines fünften Steuersignals zur Umlegung eines Schalters (S12) derart, dass dem Ersatz-Lasersender (2) das Regelsignal der Laserregelung zugeführt wird.

18. Vorrichtung nach einem der Ansprüche 9 bis 17, **gekennzeichnet durch** eine RESET-Schaltung, die sämtliche Schalter (S11, S21, S12, S22, S13, S23) der Schaltermatrix in eine definierte Anfangsstellung bringt.
